# EUROPÄISCHE PATENTSCHRIFT

(11) **EP 2 347 842 B1**
(45) Veröffentlichungstag und Bekanntmachung des Hinweises auf die Patenterteilung: **22.04.2015**
(21) Anmeldenummer: 11151216.6
(22) Anmeldetag: 18.01.2011
(51) Int. Cl.: B23B 31/30, B23B 31/40

(54) **Dehnspanneinrichtung und Verfahren zu deren Herstellung**
Expansion chucking device and method of manufacture thereof
Dispositif de serrage extensible et son procédé de fabrication

(30) Priorität: 26.01.2010 DE 102010005844
(43) Veröffentlichungstag der Anmeldung: 27.07.2011
(73) Patentinhaber: Schunk GmbH & Co. KG Spann- und Greiftechnik, 74348 Lauffen (DE)
(72) Erfinder: Retzbach, Thomas, 74357, Bönnigheim (DE)
(74) Vertreter: Albrecht, Ralf

(56) Entgegenhaltungen:
- WO-A1-2009/092365
- DE-A1- 3 046 094
- DE-C1- 10 221 507
- DE-U1- 20 023 140
- DE-U1- 29 603 751
- FR-A1- 2 873 944

## Beschreibung

Die vorliegende Erfindung betrifft eine Dehnspanneinrichtung gemäss dem Oberbegriff des Patentanspruchs 1. Eine derartige Dehnspanneinrichtung ist aus der DE 30 46 094 bekannt. Des weiteren betrifft die Erfindung ein Verfahren zur Herstellung einer solchen Dehnspanneinrichtung.

Dehnspanneinrichtungen dieser Art sind in unterschiedlichen Ausführungsformen bekannt und werden in erster Linie eingesetzt, um einen Werkzeugschaft wie beispielsweise einen Bohrer- oder Fräserschaft in der Arbeitsspindel einer entsprechenden Werkzeugmaschine zu fixieren. Man unterscheidet zwei Arten von Dehnspanneinrichtungen, nämlich zum einen sogenannte Spanndorne, bei denen die Dehnbüchse den Grundkörper umgibt und sich bei Druckbeaufschlagung der Druckkammer radial nach außen aufweitet, und zum anderen Spannfutter, bei denen die Dehnbüchse in den Grundkörper eingesetzt ist und zum Spannen einer Welle oder eines Schaftes radial nach innen verformt wird.

Konkret wird die Lötverbindung in einem sogenannten Hochtemperaturlötverfahren hergestellt, bei dem die Dehnbüchse an dem Grundkörper positioniert und die Anordnung zusammen mit dem erforderlichen Lötmaterial, das in hierfür vorgesehenen Nuten in den gewünschten Verbindungsbereichen untergebracht ist, in einem Hochtemperaturofen auf eine Temperatur erhitzt wird, die für das Aufschmelzen des Lötmaterials erforderlich ist. Je nach eingesetztem Lötmaterial liegen diese Temperaturen im Bereich von 850 bis 1100°C, und entsprechend wird für das Material des Grundkörpers Warmarbeitsstähle, beispielsweise ein Warmarbeitsstahl gemäß DIN 1.2343, eingesetzt, die ohne Überhitzung auf diese Temperaturen erhitzt werden können. Der Einsatz von Warmarbeitsstählen gestaltet sich jedoch insoweit als nicht unproblematisch, weil sie zur Bildung von Wickelspähnen neigen und daher schwierig zu zerspanen sind, was zu langen Bearbeitungszeiten führt. Außerdem sind Warmarbeitsstähle in der Regel vergleichsweise teuer.

Aufgabe der vorliegenden Erfindung ist es daher, eine Dehnspanneinrichtung der eingangs genannten Art anzugeben, die einfach und günstig herzustellen ist. Des weiteren soll ein Verfahren zur Herstellung einer solchen Dehnspanneinrichtung angegeben werden.

Diese Aufgabe ist erfindungsgemäß bei der Dehnspanneinrichtung der eingangs genannten Art dadurch gelöst, dass der Grundkörper aus einem niedriglegierten Vergütungsstahl besteht und die Dehnbüchse mit dem Grundkörper durch Hochtemperaturlöten mit einem Lötmaterial, dessen Schmelztemperatur oberhalb der Härtungstemperatur des niedriglegierten Vergütungsstahls liegt, verbunden ist. Das erfindungsgemäße Verfahren zur Herstellung einer solchen Dehnspanneinrichtung nach dem Hochtemperaturlöten zeichnet sich entsprechend dadurch aus, dass ein Grundkörper aus einem niedriglegierten Vergütungsstahl eingesetzt wird, und ein Lötmaterial verwendet wird, dessen Schmelztemperatur oberhalb der Härtungstemperatur des niedriglegierten Vergütungsstahls liegt.

Der Erfindung liegt somit die Überlegung zugrunde, Vergütungsstähle wie beispielsweise Werkstoffe gemäß DIN 1.7225, 1.7227, 1.7045 oder 1.8159 einzusetzen, die deutlich günstiger sind als die üblicherweise eingesetzten Warmarbeitsstähle und zudem gut zerspanbar sind. Beim Hochtemperaturlöten wird der aus dem niedriglegierten Vergütungsstahl bestehende Grundkörper beispielsweise beim Einsatz von Palladium oder Kupfer als Lötmaterial auf Temperaturen erhitzt, die etwa 150 bis 350°C und insbesondere 200 bis 300°C höher liegen als die Härtungstemperatur des eingesetzten niedriglegierten Vergütungsstahls. Mit anderen Worten wird der Vergütungsstahl beim Hochtemperaturlöten überhitzt, wodurch sich freier Kohlenstoff bildet, welcher Voraussetzung dafür ist, den Vergütungsstahl durch Abschreckung zu härten. Die Abschreckung erfolgt vorzugsweise mittels eines Gases, insbesondere mittels eines Stickstoffgases oder Heliumgases. Hierbei wird zweckmäßigerweise ein Gasdruck von mehr als 6 bar und insbesondere 10 bis 12 bar eingesetzt. Durch die Gas-Abschreckung entsteht ein Zwischenstufengefüge mit Ferrit, Bainit und Martensit, welches eine Festigkeit von mehr als 800 N/mm² hat.

In bevorzugter Weise ist vorgesehen, dass der Grundkörper und die damit verbundene Dehnbüchse nitriert und insbesondere gasnitiert sind, wobei der Nitriervorgang nach dem Hochtemperaturlöten und Abschrecken durchgeführt wird. In bevorzugter Weise erfolgt der Nitiervorgang bei einer Temperatur von 500 bis 600°C, insbesondere bei 550°C für eine Dauer von 6 bis 10 Stunden, insbesondere von 7 bis 9 Stunden und besonders bevorzugt von 7 Stunden. Dabei wird das Grundgefüge angelassen und eine hohe Oberflächenhärte von 650 - 750 HV1 (Vickershärte) mit einem entsprechenden Korrosionsschutz erzielt.

Zum optischen Verfeinern bzw. zur Erhöhung der Korrosionsbeständigkeit kann die so hergestellte Anordnung gebläut bzw. oxidiert werden, wodurch sich eine quasi schwarzblaue Oberfläche ergibt.

Die so hergestellte Dehnspanneinrichtung kann dann endbearbeitet werden, wobei sie aufgrund des Materialabtrages ihre Härte verliert, die nach durchgeführten Versuchen bei etwa 550 - 650 HV1 liegt.

Hinsichtlich weiterer vorteilhafter Ausgestaltung der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: eine erste Ausführungsform einer als Dehnspannfutter ausgebildeten Dehnpanneinrichtung gemäß der vorliegenden Erfindung im Längsschnitt, und
- Figur 2: eine Ausführungsform einer als Dehnspanndorn ausgebildeten Dehnspanneinrichtung gemäß der vorliegenden Erfindung im Längsschnitt.

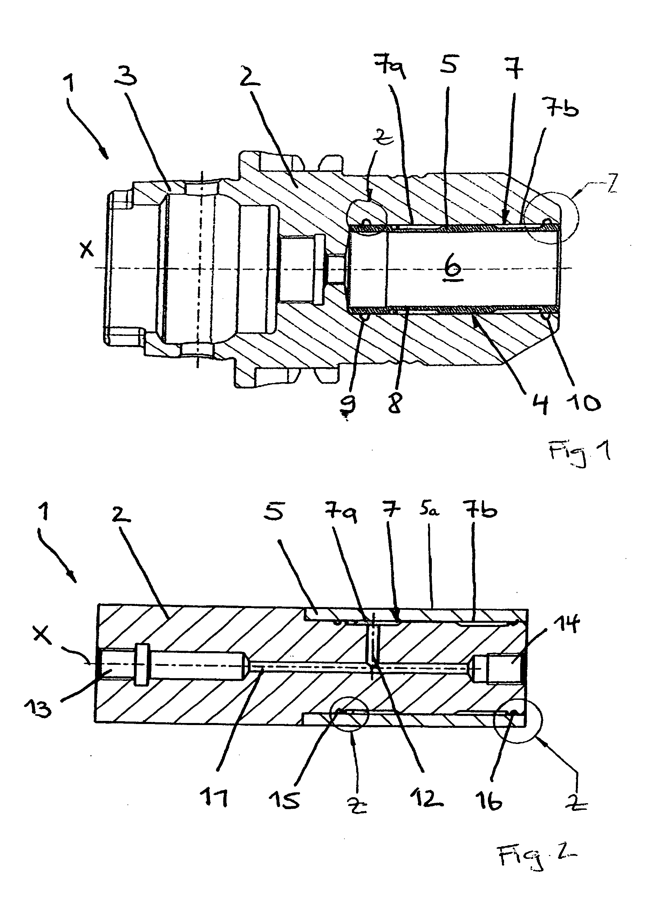

In der Figur 1 ist eine Ausführungsform eines als Steilkegelwerkzeughalter ausgebildeten Dehnspannfutters 1 gemäß der vorliegenden Erfindung im Längsschnitt dargestellt. Das Dehnspannfutter 1 umfasst einen Grundkörper 2 aus einem formsteifen Material, der an seinem linksseitigen Endbereich in an sich bekannter Weise einen Befestigungskonus 3 zur Einspannung an einer drehangetriebenen Arbeitsspindel einer Werkzeugmaschine aufweist. An dem anderen Ende des Grundkörpers 2 ist ein Anschlußschaft mit einer zentralen Axialbohrung 4 vorgesehen, in die eine Dehnbüchse 5 eingesetzt ist. Die Dehnbüchse 5 bildet dabei eine Aufnahme 6, in die ein zylindrischer Schaft eines Werkzeugs wie beispielsweise eines Bohrers oder Fräsers eingeschoben werden kann.

Zwischen der Dehnbüchse 5 und dem Grundkörper 2 ist eine Druckkammer 7 ausgebildet, welche die Aufnahme 6 umgibt und koaxial zu dieser ausgerichtet ist. Die Druckkammer 7, deren axiale Länge etwa dem erforderlichen Spannbereich entspricht, wird durch zwei ringartige Ausnehmungen 7a, 7b in der Mantelfläche der Dehnbüchse 5, die untereinander verbunden sind, gebildet.

Zur Aufnahme 6 hin wird die Druckkammer 7 von einer relativ schmalen Innenwand der Dehnbüchse 5 und radial nach außen von der Wandung des Grundkörpers 2, deren Wandstärke um ein mehrfaches größer als die Wandstärke der Innenwand ist, begrenzt. Die Druckkammer 7 ist mit einem Hydraulikmittel wie beispielsweise Öl gefüllt und steht in nicht dargestellter Weise über einen im Grundkörper 2 ausgebildeten Kanal mit einer Hydraulikmittelquelle in Verbindung, durch die sie zum Spannen eines Werkzeugs mit Druck beaufschlagt werden kann. Die Druckmittelquelle kann in an sich bekannter Weise von einem im Grundkörper 2 ausgebildeten Zylinderraum gebildet sein, der endseitig durch ein kolbenartiges Stellorgan verschlossen ist, das zur Erhöhung des Drucks in den Zylinderraum eingeschraubt bzw. zur Verringerung des Drucks aus dieser heraus geschraubt werden kann. Dieser hydraulische Druck wird über den Kanal zur Druckkammer 7 übertragen und bewirkt eine elastische Auswölbung der Innenwand 8 nach innen, bis diese den in die Aufnahme 6 eingesetzten Werkzeugschaft fest umschließt.

Die Dehnbüchse 5 ist an ihren axialen Endbereichen Z mit dem Grundkörper 2 durch Hochtemperaturlöten fest verbunden. In der Figur 1 ist gut erkennbar, dass an den axialen Endbereichen Z in dem Grundkörper 2 Ringnuten 9, 10 ausgebildet sind, in welchen das Lötmaterial für das Hochtemperaturlöten untergebracht werden kann. Alternativ ist es auch möglich, entsprechende Ringnuten außenseitig in der Dehnbüchse 5 vorzusehen. Zur Herstellung der Verbindung wird in an sich bekannter Weise das Lötmaterial in die Ringnuten 9, 10 eingebracht und die Dehnbüchse 5 in die Axialbohrung 4 eingeschoben. Die so vorbereitete Anordnung wird dann in einen Hochtemperaturofen untergebracht und erhitzt, um das Lötmaterial aufzuschmelzen.

Erfindungsgemäß ist nun vorgesehen, dass der Grundkörper 2 bzw. die Dehnbüchse 5 aus einem niedriglegierten Vergütungsstahl wie beispielsweise einem Werkstoff gemäß DIN 1.7225, 1.7227, 1.7045 oder 1.8159 besteht und als Lötmaterial ein Werkstoff wie beispielsweise Legierungen mit Palladium oder Kupfer eingesetzt wird, dessen Schmelztemperatur oberhalb der Härtungstemperatur des Vergütungsstahls liegt. Dies hat zur Folge, dass der Grundkörper 2 und die Dehnbüchse 5 im Hochtemperaturlötofen überhitzt wird, wenn das Lötmaterial auf die Schmelztemperatur von 850 bzw. 1100°C erhitzt wird. Durch diese Überhitzung entsteht in dem Material des Grundkörpers 2 freier Kohlenstoff, der die Möglichkeit bildet, den Grundkörper 2 nach dem Hochtemperaturlöten abschrecken und so zu härten. Beim Abschreckvorgang wird ein Stickstoffgas eingesetzt, das unter einem Gasdruck von 10 bis 12 bar zugeführt wird. Dabei entsteht in dem Grundkörper 2 und der Dehnbüchse 5 ein Zwischenstufengefüge mit Ferrit, Bainit und Martensit, welches eine Festigkeit von mehr als 800 N/mm² hat.

Die so hergestellte Anordnung wird einem Nitrierprozess unterworfen. Konkret wird die Anordnung aus Grundkörper 2 und Dehnbüchse 5 bei einer Temperatur von etwa 550°C für eine Dauer von 7 Stunden nitriert. Dabei wird das Grundgefüge angelassen und eine hohe Oberflächenhärte von 650 - 750 HV1 mit einem entsprechenden Korrosionsschutz erzielt. Das nitrierte Bauteil wird anschließend gebläut bzw. oxidiert, so dass es eine schwarzblaue Oberfläche erhält. Schließlich wird das Bauteil endbearbeitet, nämlich gedreht, geschliffen und poliert, wobei seine Härte aufgrund des Materialabtrages auf ca. 550 - 650 HV1 absinkt.

In der Figur 2 ist eine Dehnspanneinrichtung dargestellt, die hier als Dehnspanndorn 1 ausgebildet ist, welche dazu dient, außenseitig ein Bauteil zu spannen. Der Dehnspanndorn 1 besitzt einen Grundkörper 2, der an seinem linken Endbereich beispielsweise in der Arbeitsspindel einer Arbeitsmaschine einspannbar ist und an seinem rechten Endbereich außenseitig eine Dehnbüchse 5 trägt. Die Dehnbüchse 5 bildet außenseitig eine Spannfläche 5a, auf die ein zu spannendes Bauteil aufgeschoben werden kann. Zwischen der Dehnbüchse 5 und dem Grundkörper 2 ist eine Druckkammer 7 ausgebildet, welche koaxial zu der Spanndornachse X ausgerichtet ist. Die Druckkammer 7 wird durch zwei ringartige Ausnehmungen 7a, 7b in der inneren Mantelfläche der Dehnbüchse 5 gebildet, wobei die Ausnehmungen 7a, 7b untereinander verbunden sind.

Außenseitig wird die Druckkammer 7 von der relativ schmalen Außenwand der Dehnbüchse 5 und innenseitig von dem Material des Grundkörpers 2 begrenzt. Die Druckkammer 7 steht mit einem im Grundkörper 2 ausgebildeten Hydraulikmittelkanal 11, welcher den Grundkörper 2 axial durchsetzt und zentral in dem Grundkörper 2 vorgesehen ist, über einen Anschlusskanal 12 in Verbindung. Der Hydraulikmittelkanal 11 ist an seinen Endbereichen mit Gewindebohrungen 13, 14 versehen, die durch nicht dargestellte Spannschrauben verschlossen sind. Um ein Bauteil zu spannen, wird eine dieser Spannschrauben in das Grundkörperinnere geschraubt, wodurch sich der Hydraulikdruck innerhalb der Hydraulikmittelleitung 11, des Anschlusskanals 12 sowie der Druckkammer 7 erhöht und auf diese Weise die Dehnbüchse 5 elastisch nach außen verformt wird.

Wie schon bei der ersten Ausführungsform ist die Dehnbüchse 5 an ihren axialen Endbereichen Z mit dem Grundkörper 2 durch Hochtemperaturlöten verbunden. In der Zeichnung erkennbar sind Ringnuten 15, 16, die im Bereich der axialen Endbereichen Z der Dehnbüchse 5 außenseitig in dem Grundkörper 2 untergebracht sind. In gleicher Weise wie bei dem Dehnspannfutter, welches in der Figur 1 dargestellt ist, besteht der Grundkörper 2 aus einem niedriglegierten Vergütungsstahl und wird ein Lötmaterial wie beispielsweise Kupfer oder Paladiumhaltige Legierung eingesetzt, welches eine oberhalb der Härtungstemperatur des Vergütungsstahls liegende Schmelztemperatur besitzt, so dass der Dehnspanndorn gemäß Figur 2 in gleicher Weise wie das Dehnspannfutter gemäß Figur 1 in einem Hochtemperaturlötverfahren mit dem beschriebenen Nachbehandlungsschritten (Härten durch Gas-Abschreckung, Nitrieren, Bläuen, Endbearbeitung) hergestellt werden kann.

## Patentansprüche

1. Dehnspanneinrichtung mit einem Grundkörper (2) und einer Dehnbüchse (5), die unter Bildung einer geschlossenen Druckkammer (7) in den Grundkörper (2) eingesetzt ist oder diesen umgibt und zumindest an einem axialen Endbereich mit dem Grundkörper (2) verlötet ist, wobei die Druckkammer (7) unter elastischer Verformung der Dehnbüchse (5) mit einem Hydraulikmittel beaufschlagbar ist, um eine Spannwirkung zu erzielen, **dadurch gekennzeichnet, dass** der Grundkörper aus einem niedriglegierten Vergütungsstahl besteht und die Dehnbüchse (5) mit dem Grundkörper (2) durch Hochtemperaturlöten mit einem Lötmaterial, dessen Schmelztemperatur oberhalb der Härtungstemperatur des Vergütungsstahls liegt, verbunden ist.

2. Dehnspanneinrichtung nach Anspruch 1, **dadurch gekennzeichnet, dass** der niedriglegierte Vergütungsstahl ein Werkstoff gemäß DIN 1.7225, 1.7227, 1.7045 oder 1.8159 ist.

3. Dehnspanneinrichtung nach Anspruch 1 oder 2, **dadurch gekennzeichnet, dass** das Lötmaterial zumindest im Wesentlichen aus Palladiumlegierung oder Kupfer oder Nickellegierung besteht.

4. Dehnspanneinrichtung nach einem der vorherigen Ansprüche, **dadurch gekennzeichnet, dass** der Grundkörper und die damit verbundene Dehnbüchse (5) nitriert, insbesondere gasnitriert sind.

5. Dehnspanneinrichtung nach einem der vorherigen Ansprüche, **dadurch gekennzeichnet, dass** die Dehnbüchse (5) mit dem Grundkörper (2) an ihren beiden Endbereichen durch Hochtemperaturlöten fest verbunden ist.

6. Dehnspanneinrichtung nach einem der vorherigen Ansprüche, **dadurch gekennzeichnet, dass** der Grundkörper (2) und/oder die Dehnbüchse (5) in den Verbindungsbereichen (9, 10; 15, 16), in denen sie miteinander verlötet sind, Ausnehmungen für das Lötmaterial aufweisen.

7. Verfahren zur Herstellung einer Dehnspanneinrichtung mit einem Grundkörper (2) und einer Dehnbüchse (5), die unter Bildung einer geschlossenen Druckkammer (7) in den Grundkörper (2) eingesetzt ist oder diesen umgibt und zumindest an einem axialen Endbereich mit dem Grundkörper (2) verlötet ist, bei dem der Grundkörper (2) und die Dehnbüchse (5) unter Verwendung eines Lötmaterials durch Hochtemperaturlöten miteinander verbunden werden, **dadurch gekennzeichnet, dass** ein Grundkörper (2) aus einem niedriglegierten Vergütungsstahl eingesetzt wird und ein Lötmaterial verwendet wird, dessen Schmelztemperatur oberhalb der Härtungstemperatur des Vergütungsstahls liegt.

8. Verfahren nach Anspruch 7, **dadurch gekennzeichnet, dass** ein Vergütungsstahl gemäß DIN 1.7225, 1.7227, 1.7045 oder 1.8159 eingesetzt wird.

9. Verfahren nach Anspruch 7 oder 8, **dadurch gekennzeichnet, dass** der Grundkörper (2) während des Hochtemperaturlötens auf eine Temperatur erhitzt wird, die etwa 150 bis 350°C und insbesondere 200 bis 300°C höher liegt als die Härtungstemperatur des Materials, aus dem der Grundkörper (2) besteht.

10. Verfahren nach einem der Ansprüche 7 bis 9, **dadurch gekennzeichnet, dass** Palladium oder Kupfer als Lötmaterial eingesetzt wird.

11. Verfahren nach einem der Ansprüche 7 bis 10, **dadurch gekennzeichnet, dass** die Anordnung aus Grundkörper (2) und damit verbundener Dehnbüchse (5) nach dem Hochtemperaturlöten abgeschreckt wird.

12. Verfahren nach Anspruch 11, **dadurch gekennzeichnet, dass** die Abschreckung mittels eines Gases, insbesondere mit einem Stickstoffgas, unter einem Gasdruck von mehr als 6 bar erfolgt.

13. Verfahren nach Anspruch 12, **dadurch gekennzeichnet, dass** der Gasdruck 10 bis 12 bar beträgt.

14. Verfahren nach einem der Ansprüche 7 bis 13, **dadurch gekennzeichnet, dass** die Anordnung aus Grundkörper (2) und Dehnbüchse (5) nach dem Hochtemperaturlöten und Abschrecken nitriert, insbesondere gasnitriert wird.

15. Verfahren nach Anspruch 14, **dadurch gekennzeichnet, dass** der Nitriervorgang bei einer Temperatur von 500 bis 600°C, insbesondere bei 550°C für eine Dauer von sechs bis zehn Stunden, insbesondere von sieben bis neun Stunden und vorzugsweise von 7 Stunden durchgeführt wird.

## Claims

1. An expanding clamping device that has a base body (2) and an expanding bush (5), which is inserted into the base body (2) or surrounds the same such as to form a closed pressure chamber (7), and at at least one axial end region is soldered to the base body (2), the pressure chamber (7) being chargeable with a hydraulic medium with elastic deformation of the expanding bush (5) in order to achieve a clamping effect, **characterised in that** the base body is made of a low alloy heat-treated steel and the expanding bush (5) is connected to the base body (2) by high temperature soldering with a soldering material the melting temperature of which is above the hardening temperature of the heat-treated steel.

2. The expanding clamping device according to Claim 1, **characterised in that** the low alloy heat-treated steel is a material according to DIN 1.7225, 1.7227, 1.7045 or 1.8159.

3. The expanding clamping device according to Claim 1 or 2, **characterised in that** the soldering material is made at least substantially of palladium alloy or copper or nickel alloy.

4. The expanding clamping device according to any of the preceding claims, **characterised in that** the base body and the expanding bush (5) connected to the latter are nitrided, in particular gas nitrided.

5. The expanding clamping device according to any of the preceding claims, **characterised in that** the expanding bush (5) is securely connected to the base body (2) at its two end regions by high temperature soldering.

6. The expanding clamping device according to any of the preceding claims, **characterised in that** the base body (2) and/or the expanding bush (5) have recesses for the soldering material in the connection regions (9, 10; 15, 16) in which they are soldered to one another.

7. A method for producing an expanding clamping device that has a base body (2) and an expanding bush (5), which is inserted into the base body (2) or surrounds the same such as to form a closed pressure chamber (7) and at at least one axial end region is soldered to the base body (2), wherein the base body (2) and the expanding bush (5) are connected to one another by high temperature soldering using a soldering material, **characterised in that** a base body (2) made of a low alloy heat-treated steel is used and a soldering material is used the melting temperature of which is above the hardening temperature of the heat-treated steel.

8. The method according to Claim 7, **characterised in that** a heat-treated steel according to DIN 1.7225, 1.7227, 1.7045 or 1.8159 is used.

9. The method according to Claim 7 or 8, **characterised in that** during the high temperature soldering the base body (2) is heated to a temperature that is approximately 150 to 350°C and in particular 200 to 300°C higher than the hardening temperature of the material from which the base body (2) is made.

10. The method according to any of Claims 7 to 9, **characterised in that** palladium or copper is used as the soldering material.

11. The method according to any of Claims 7 to 10, **characterised in that** the arrangement consisting of the base body (2) and the expanding bush (5) connected to the latter is quenched after the high temperature soldering.

12. The method according to Claim 11, **characterised in that** the quenching takes place by means of a gas, in particular with a nitrogen gas, at a gas pressure of more than 6 bar.

13. The method according to Claim 12, **characterised in that** the gas pressure is 10 to 12 bar.

14. The method according to any of Claims 7 to 13, **characterised in that** the arrangement consisting of the base body (2) and the expanding bush (5) is nitrided, in particular gas nitrided, after the high temperature soldering and quenching.

15. The method according to Claim 14, **characterised in that** the nitriding process is carried out at a temperature of 500 to 600°C, in particular at 550° C for a period of six to ten hours, in particular seven to nine hours, and preferably 7 hours.

## Revendications

1. Dispositif de serrage extensible avec un corps de base (2) et une douille extensible (5) qui, lorsque se forme une chambre de pression (7), vient s'insérer dans le corps de base (2) ou entoure ce dernier et est soudée à au moins l'une des extrémités axiales au corps de base (2), la chambre de pression (7) pouvant être pressurisé à l'aide d'un fluide hydraulique pour déformer élastiquement la douille extensible (5) afin d'obtenir un effet de serrage, **caractérisé en ce que** le corps de base est composé d'un acier thermo-traité faiblement allié et que la douille extensible (5) est relié au corps de base (2) par brasage à haute température avec un matériau de brasage dont la température de fusion est supérieure à la température de durcissement de l'acier thermo-traité.

2. Dispositif de serrage extensible selon la revendication 1, **caractérisé en ce que** l'acier thermo-traité faiblement allié est une matière au sens de DIN 1.7225, 1.7227, 1.7045 ou 1.8159.

3. Dispositif de serrage extensible selon la revendication 1 ou 2, **caractérisé en ce que** le matériau de brasage est composé au moins essentiellement d'un alliage de palladium, de cuivre ou de nickel.

4. Dispositif de serrage extensible selon l'une des revendications précédentes, **caractérisé en ce que** le corps de base et la douille extensible (5) qui lui est reliée sont nitrurés, plus précisément nitrurés au gaz.

5. Dispositif de serrage extensible selon l'une des revendications précédentes, **caractérisé en ce que** la douille extensible (5) est reliée solidement au corps de base (2) par ses deux extrémités au moyen d'un brasage à haute température.

6. Dispositif de serrage extensible selon l'une des revendications précédentes, **caractérisé en ce que** le corps de base (2) et/ou la douille extensible (5) présentent des exclusions pour accueillir le matériau de brasage dans les régions de connexion (9, 10; 15, 16) par lesquels ils sont reliés l'un à l'autre.

7. Procédé de fabrication d'un dispositif de serrage extensible avec un corps de base (2) et une douille extensible (5) qui, lorsque se forme une chambre de pression (7), vient s'insérer dans le corps de base (2) ou entoure ce dernier et est soudée à au moins l'une des extrémités axiales du corps de base (2), lors duquel le corps de base (2) et la douille extensible (5) sont reliés l'un à l'autre par brasage à haute température avec un matériau de brasage, **caractérisé en ce que** sont utilisés un corps de base (2) composé d'un acier thermo-traité faiblement allié et un matériau de brasage dont la température de fusion est supérieure à la température de durcissement de l'acier thermo-traité.

8. Procédé selon la revendication 7, **caractérisé en ce qu'**est utilisé un acier thermo-traité au sens de DIN 1.7225, 1.7227, 1.7045 ou 1.8159.

9. Procédé selon la revendication 7 ou 8, **caractérisé en ce que** le corps de base (2) est, lors du brasage à haute température, réchauffé à une température d'environ 150 à 350 °C, plus précisément 200 à 300 °C supérieure à la température de durcissement du matériau composant le corps de base (2).

10. Procédé selon l'une des revendications 7 à 9, **caractérisé en ce que** le matériau de brasage utilisé est le palladium ou le cuivre.

11. Procédé selon au moins l'une des revendications 7 à 10, **caractérisé en ce que** l'assemblage du corps de base (2) et de la douille extensible (5) qui lui est reliée est refroidi brusquement suite au brasage à haute température.

12. Procédé selon la revendication 11, **caractérisé en ce que** le refroidissement est effectué au moyen d'un gaz, notamment d'azote gazeux, à une pression de gaz de plus de 6 bars.

13. Procédé selon les revendications 12, **caractérisé en ce que** la pression de gaz est de 10 à 12 bars.

14. Procédé selon au moins l'une des revendications 7 à 13, **caractérisé en ce que** l'assemblage du corps de base (2) et de la douille extensible (5) est nitruré, ou plus précisément nitruré au gaz, suite au brasage à haute température et au refroidissement.

15. Procédé selon la revendication 14, **caractérisé en ce que** la nitruration a lieu à une température de 500 à 600 °C, ou plus précisément de 550 °C, pendant six à dix heures, plus précisément sept à neuf heures et idéalement 7 heures.
